# EUROPÄISCHE PATENTSCHRIFT

(11) **EP 1 217 267 B1**
(45) Veröffentlichungstag und Bekanntmachung des Hinweises auf die Patenterteilung: **27.04.2005**
(21) Anmeldenummer: 01126663.2
(22) Anmeldetag: 08.11.2001
(51) Int. Cl.: F16J 15/08

(54) **Metallische Zylinderkopfdichtung**
Metallic cylinder head gasket
Joint de culasse métallique

(30) Priorität: 19.12.2000 DE 10063361
(43) Veröffentlichungstag der Anmeldung: 26.06.2002
(73) Patentinhaber: Federal-Mogul Sealing Systems GmbH, 57562 Herdorf (DE)
(72) Erfinder: Klinner, Manfred, 51145 Köln (DE)

(56) Entgegenhaltungen:
- DE-A- 3 001 730
- DE-A- 4 109 951
- DE-U- 8 630 692

## Beschreibung

Die Erfindung betrifft eine Zylinderkopfdichtung für Verbrennungskraftmaschinen, bestehend aus einer oder mehreren übereinanderliegenden Platten aus Metall mit benachbarten Durchgangsöffnungen, die über einen schmalen Stegabschnitt voneinander getrennt sind, insbesondere für den Durchtritt von Kühlflüssigkeiten oder Schmiermitteln sowie die Durchgangsöffnungen umschließenden Dichtungselementen aus elastomeren oder duroplastischen Material wobei die Dichtungselement an die Innenumfangsflächen der Durchgangsöffnungen einer Platte angeordnet sind.

Zur Erzielung von setzarmen und weitgehend nachzugsfreien Zylinderkopfdichtungen ist es bekannt, vor allem in Verbrennungskraftmaschinen mit hohen Verbrennungsdrücken metallische Zylinderkopfdichtungen einzusetzen. Es werden einals auch mehrlagige Dichtungskonstruktionen verwendet. Die einzelnen Metalllagen bestehen dabei bevorzugt aus Stahl wobei bei mehrlagigen Konstruktionen die einzelnen Lagen unterschiedliche Eigenschaften aufweisen können. So können beispielsweise die äußeren Lagen aus dünnen elastischen, harten Stahlblechen gebildet sein während die inneren Lagen aus dickeren weicheren Stahlblechen bestehen. Problematisch ist bei metallischen Dichtungen vor allem wegen der geringen plastischen Verformbarkeit die Abdichtung an den Durchgangsöffnungen für das Schmieröl des Motors oder das Kühlmittel für den Brennraum. Diese Bereiche werden deshalb mittels elastomerer oder plastomerer Dichtelemente abgedichtet. So ist es seit langem bekannt, die Durchgangsöffnungen durch eingespritzte Dichtungselemente abzudichten. Die GB PS 852413 offenbart ein solches Herstellungsverfahren. Die einzelnen Duchgangsöffnungen werden mit ein und demselben Werkstoff abgedichtet, dabei erstrecken sich die Dichtelemente sowohl an der Innenumfangsfläche der Duchgangsöffnungen als auch über die Dichtfläche der Metalllage. Beim Einbau in den Motor werden dann die sich auf der Dichtfläche der Metalllage erstreckenden Bereiche der Dichtelemente zerquetscht. Ein weiteres Problem bei angespritzten Dichtelemente besteht darin, dass im Motorbetrieb die Dichtungselemente in den Flüssigkeitsdurchgängen ständig bei meist erhöhter Temperatur und erhöhtem Druck belastet werden. Bei sehr dünnen Metallplatten besteht die Gefahr, dass die Dichtelemente von den sehr kleinen Innenumfangsflächen der Platten abreißen. Um dieses Problem zu beseitigen wurden deshalb auch schon Dichtungselemente separat hergestellt und dann in die Durchgangsöffnungen der Zylinderkopfdichtung eingepreßt

Die DE 3719189 A1 offenbart eine solche Zylinderkopfdichtung bei der in die Durchgangsöffnungen elastomere Dichtelemente eingesetzt sind. Die Dichtungselemente sind als getrennt von der Dichtung hergestellte, separate Bauteile ausgebildet und werden in die Durchgangsöffnungen eingesetzt und mit einer Dichtungsplatte formschlüssig verbunden. Die Dichtungselemente können auch mit Verstärkungseinlagen versehen sein.

Die DE 3001 730 A1 offenbart eine Zylinderkopfdichtung mit benachbarten Durchgangsöffnungen, die über einen Stegabschnitt voneinander getrennt sind, sowie Dichtungselemente an den Innenumfangsflächen der Durchgangsöffnungen, gemäß dem Oberbegriff des Anspruchs 1.

Es hat sich gezeigt, dass in der industriellen Massenfertigung das Anspritzen der Dichtungselemente in Hinblick auf die Fertigungskosten den Einsatz-Dichtungsringen überlegen sind, deswegen ist der auf dem Gebiet der Dichtungstechnik agierende Fachmann bestrebt, das Spritzverfahren beizubehalten. Moderne Werkstoffen und Fertigungstechniken haben dazu geführt, dass die Dichtungselemente ausreichend fest mit der Dichtungsplatte verbindbar sind. Das Problem bei modernen Motoren stellt sich aber dahingehend, dass die Stegabschnitte zwischen den einzelnen Durchgangsöffnungen zunehmend schmaler werden.
Angespritzte profilierte Dichtungselemente an die Innenumfangsfläche der Durchgangsöffnungen benötigen daher einen definierten Abstand der Durchgangsöffnungen voneinander, da jede Durchgangsöffnung ein separates Dichtelement benötigt, verlaufen im Stegbereich zwei Dichtungselemente nebeneinander.
Der vorhanden Stegabschnitt benötigt zudem eine Mindestbreite als Funktion der Blechstärke, so dass zwei Dichtelemente und die Mindestbreite des Stegabschnittes den notwendigen Abstand der Durchgangsöffnungen bestimmen.

Der Erfindung liegt die Aufgabe zugrunde eine gattungsgemäße Zylinderkopfdichtung dahingehend zu verbessern, dass im Massenfertigungsbetrieb die Dichtungselemente direkt an die Innenumfangsflächen der Durchgangsöffnungen anspritzbar sind und das gleichzeitig die Breite des Stegabschnittes reduzierbar ist.

Diese Aufgabe wird erfindungsgemäß durch die kennzeichnenden Merkmale des Patentanspruch 1 gelöst.

Vorteilhafte Ausgestaltungen der Erfindung sind in den Unteransprüchen dokumentiert.

Durch die Reduzierung der Materialstärke der Platte im Stegabschnitt ist es nunmehr möglich, die Dichtungselemente zweier Durchgangsöffnungen im Stegabschnitt zusammenlaufen zu lassen. Durch die Reduzierung der Materialstärke im Stegbereich kann nunmehr die Oberfläche der Platte mit dem Dichtungsmaterial beschichtet werden ohne dass die Gefahr besteht, dass die Dichtungselemente im Einbauzustand beschädigt werden. Durch die Einlagerung des Stegabschnittes in die Dichtelemente ist eine Verstärkung der Dichtelemente geschaffen mit der es möglich ist, die Stagnierte zu reduzieren ohne dass Einbußen im Hinblick auf die Dichtheit zu befürchten sind.

Die Erfindung ist anhand eines Ausführungsbeispieles in der Zeichnung dargestellt und wird im folgenden näher erläutert.

Es zeigen:
- Fig. 1: Ausschnitt einer herkömmlichen Zylinderkopfdichtung in der Aufsicht.
- Fig.2: eine Ansicht gemäß Fig. 1 der Linie II-II.
- Fig.3: eine erfindungsgemäße Zylinderkopfdichtung gemäß Fig.2

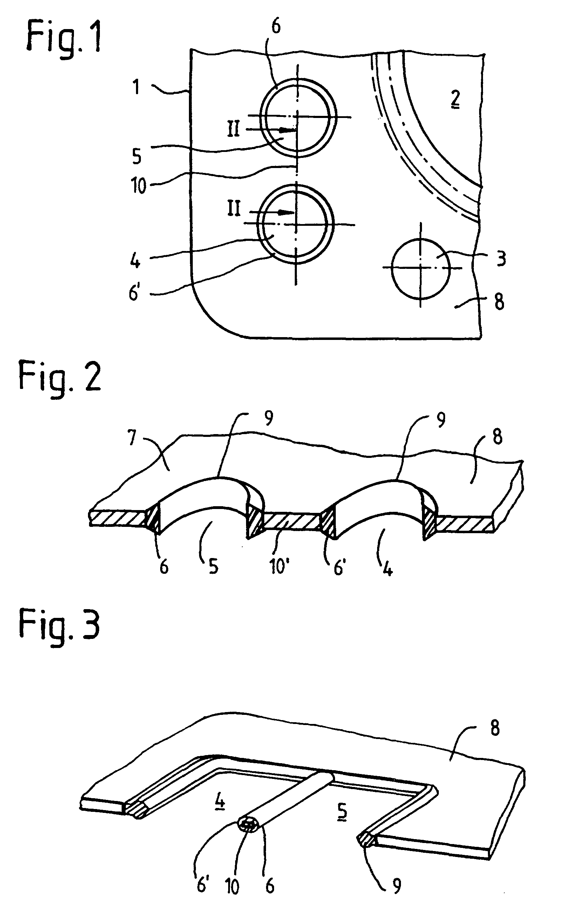

Die Figur 1 zeigt eine metallische Zylinderkopfdichtung 1 in der Aufsicht. Die Dichtung ist als Einlagendichtung ausgebildet, es können aber zusätzliche Lagen auflaminiert sein.

Die aus nur einer Platte gebildete Zylinderkopfdichtung weist mehrere Durchgangsöffnungen 2,3,4,5 für Brennräume 2, Befestigungsschrauben 3, für das Schmiermittel 4 und für das Kühlmittel 5.

Die Fig. 2 zeigt einen Querschnitt gemäß Linie II-II der Figur 1. Die Durchgangsöffnungen 4,5 für das Schmiermittel und das Kühlmittel weisen je ein angespritztes Dichtungselement 6,6' auf. Das Dichtungselement 6,6' weist eine Profilierung auf, die aus der Oberfläche 7 der metallische Platte 8 herausragt und als Rippe 9 ausgebildet ist.
Die Dichtungselemente 6,6' sind an die Innenumfangsflächen der Durchgangsöffnungen angespritzt. Im eingebauten Zustand werden die Dichtungselemente zwischen Motorblock und Zylinderkopf (nicht dargestellt) zusammengedrückt, bis die Platte 8 als inkompressibles Bauteil die Pressung begrenzt. Dabei ist ersichtlich, dass auf der Oberfläche 7 der Platte 8 kein Dichtungsmaterial sein darf, da dieses dann zerquetscht werden würde.
In der Figur 3 ist eine erfindungsgemäße Zylinderkopfdichtung dargestellt. Im Gegensatz zur bekannten Zylinderkopfdichtung gemäß Fig. 2 ist der Bereich zwischen den Durchgängen 4,5 (Stegabschnitt 10,10') durch ein Prägeverfahren gegenüber dem übrigen Bereich der Platte 8 in seiner Materialstärke reduziert. Hierdurch ist es möglich, die Dichtungselemente auch auf der Oberfläche 7 der Platte 8 anzuordnen. Im eingebauten Zustand kann so im Stegabschnitt 10 das Dichtungsmaterial nicht zerquetscht werden, da die Platte 8 im Restflächenbereich ja die ursprüngliche Dicke aufweist und so als Pressungbegrenzer fungiert.

## Patentansprüche

1. Zylinderkopfdichtung (1) für Verbrennungskraftmaschinen, bestehend aus einer oder mehreren übereinanderliegenden Platten (8) aus Metall mit benachbarten Durchgangsöffnungen (4, 5), die über einen schmalen Stegabschnitt (10) voneinander getrennt sind, insbesondere für den Durchtritt von Kühlflüssigkeiten oder Schmiermitteln sowie die Durchgangsöffnungen umschließenden Dichtungselementen (6, 6') aus elastomerem oder duroplastischem Material wobei die Dichtungselemente an den Innenumfangsflächen der Durchgangsöffnungen (4, 5) einer Platte (8) angeordnet sind, **dadurch gekennzeichnet, dass** die Materialstärke der Platte (8) im Stegabschnitt (10) kleiner als im übrigen Plattenbereich ausgebildet ist und dass der Stegabschnitt (10) vollständig von dem elastomeren - oder duroplastischen Material umschlossen ist, so dass im Stegabschnitt die Dichtungselemente (6,6') sowohl auf den Innenumfangsflächen der Durchgangsöffnungen (4,5) als auch auf der Oberfläche (7) der Platte (8) angeordnet sind.

2. Zylinderkopfdichtung nach Anspruch 1, **dadurch gekennzeichnet, dass** die Materialstärke im Stegabschnitt (10) durch ein Prägeverfahren reduziert ist.

3. Zylinderkopfdichtung nach den Ansprüchen 1 und 2, **dadurch gekennzeichnet, dass** die Dichtungselemente (6,6') eine Profilierung aufweisen.

4. Zylinderkopfdichtung nach den Ansprüchen 1 bis 3, **dadurch gekennzeichnet, dass** die Profilierung die Form einer beidseitig über die Oberfläche (7) der Platte (8) hinausragende Rippe (9) aufweist.

5. Zylinderkopfdichtung nach den Ansprüchen 1 bis 4, **dadurch gekennzeichnet, dass** das die Dichtungselemente (6,6') an die Innenumfangsflächen der Durchgangsöffnungen (4,5) angespritzt sind.

## Claims

1. Cylinder head gasket (1) for internal combustion engines, comprising one or more sheets (2) made of metal which are situated one above the other and have adjacent through-openings (4, 5) which are separated from each other via a narrow web portion (10), in particular for the passage of coolants or lubricants, and sealing elements (6, 6') which surround the through-openings and are made of elastomeric or duroplastic material, the sealing elements being disposed on the internal circumferential faces of the through-openings (4, 5) of a sheet (2), **characterised in that** the material thickness of the sheet (8) in the web portion (10) is configured smaller than in the remaining sheet region, and **in that** the web portion (10) is completely surrounded by the elastomeric or duroplastic material so that, in the web portion, the sealing elements (6, 6') are disposed both on the internal circumferential faces of the through-openings (4, 5) and on the surface (7) of the sheet (8).

2. Cylinder head gasket according to claim 1, **characterised in that** the material thickness in the web portion (10) is reduced by means of a stamping method.

3. Cylinder head gasket according to claims 1 and 2, **characterised in that** the sealing elements (6, 6') have a profiling.

4. Cylinder head gasket according to claims 1 to 3, **characterised in that** the profiling has the form of a rib (9) which protrudes beyond the surface (7) of the sheet (8) on both sides.

5. Cylinder head gasket according to claims 1 to 4, **characterised in that** the sealing elements (6, 6') are moulded on the internal circumferential faces of the through-openings (4, 5).

## Revendications

1. Joint de culasse (1) pour moteurs à combustion interne, comprenant au moins une ou plusieurs plaques métalliques superposées (8), pourvues d'ouvertures de passage adjacentes (4, 5), qui sont séparées par une partie d'entretoise étroite (10), en particulier pour le passage de liquides de refroidissement ou de lubrifiants, ainsi que d'éléments d'étanchéité (6, 6'), entourant les ouvertures de passage, et réalisés en un matériau élastomère ou thermodurcissable, de sorte que les éléments d'étanchéité sont disposés au niveau des surfaces périphériques internes des ouvertures de passage (4, 5) d'une plaque (8), **caractérisé en ce que** l'épaisseur de paroi de la plaque (8) au niveau de la partie d'entretoise (10) est inférieure que dans le restant de la plaque et **en ce que** la partie d'entretoise (10) est entièrement entourée du matériau élastomère ou thermoplastique, de sorte que dans la partie d'entretoise, les éléments d'étanchéité (6, 6'), sont disposés sur les surfaces périphériques internes des ouvertures de passage (4, 5), ainsi que sur la surface supérieure (7) de la plaque (8).

2. Joint de culasse selon la revendication 1, **caractérisé en ce que** l'épaisseur de paroi de la partie d'entretoise (10) est réduite à l'aide d'un procédé de matriçage.

3. Joint de culasse selon la revendication 1 ou 2, **caractérisé en ce que** les éléments d'étanchéité (6, 6') présentent un profil.

4. Joint de culasse selon la revendication 3, **caractérisé en ce que** le profil présente la forme d'une nervure (9) qui fait saillie vers l'extérieur des deux côtés à partir de la surface supérieure (7) de la plaque (8).

5. Joint de culasse selon l'une quelconque des revendications 1 à 4, **caractérisé en ce que** les éléments d'étanchéité (6, 6') sont injectés sur les surfaces périphériques internes des ouvertures de passage (4, 5).
